# EUROPÄISCHE PATENTANMELDUNG

(11) **EP 4 708 847 A1**
(43) Veröffentlichungstag der Anmeldung: **11.03.2026**
(21) Anmeldenummer: 24198908.6
(22) Anmeldetag: 06.09.2024
(51) Int. Cl.: H04N 17/00, F16M 11/04, B60R 1/00, F16M 11/10, G06F 1/16, F16M 11/18

(54) **VORRICHTUNG UND VERFAHREN ZUM ABBILDEN EINES KALIBRIERUNGSMUSTERS FÜR DAS KALIBRIEREN EINES BILDSENSORS EINES FAHRZEUGS**

(71) Anmelder: Hella Gutmann Solutions GmbH, 79241 Ihringen (DE)
(72) Erfinder: Egle, Ralf, 79206 Breisach (DE); Schulze, Sandro, 79331 Teningen (DE)
(74) Vertreter: Pfenning, Meinig & Partner mbB

(57) **Zusammenfassung**

Die Erfindung betrifft ein Verfahren und eine Vorrichtung zum Abbilden eines Kalibrierungsmusters für das Kalibrieren eines Bildsensors eines Fahrzeugs, wobei die Vorrichtung umfasst:
- eine außerhalb des Fahrzeugs angeordnete Anzeigeeinrichtung (12) zum Abbilden des Kalibrierungsmusters,
- ein Haltegestell (14) zum Abstützen der Anzeigeeinrichtung (12) gegenüber einem Untergrund,
wobei die Anzeigeeinrichtung (12) relativ zu dem Haltegestell (14) drehbar ist.

## Beschreibung

Die Erfindung betrifft eine Vorrichtung und ein Verfahren zum Abbilden eines Kalibrierungsmusters für das Kalibrieren eines Bildsensors eines Fahrzeugs, insbesondere einer Kamera.

Ein solches gatungsgemäßes Verfahren und eine solche Vorrichtung sind prinzipiell aus der EP 3 716 211 A1 bekannt. Dort wird mit einer Anzeigeeinrichtung ein Kalibrierungsmuster abgebildet und ein Bildsensor in Form einer Kamera nimmt dieses zwecks einer Kamerakalibrierung auf.

Allgemein wird im Rahmen einer solchen Kamerakalibrierung das Kalibrierungsmuster in durch den Fahrzeughersteller vorgegebenem Abstand und vorgegebener Höhe so vor dem Fahrzeug platziert, dass die Kamera das Kalibrierungsmuster erfasst und darauf basierend ein internes Koordinatensystem des Kamerasystems kalibriert wird.

Derartige Kalibrierung sind insbesondere dann notwendig, wenn fahrzeuggebundene Bildsensoren von Fahrerassistenzsystemen verwendet werden, wie beispielsweise Adaptive Cruise Control, ACC, einem Notfallbremsassistent, einem Spurhalteassistent, einer Hinderniserkennung, einer Verkehrsschilderkennung bis hin zu autonom fahrenden Fahrzeugen (Level 1-5).

Während sich das aus dem Stand der Technik bekannte Anzeigen von Kalibrierungsmustern mittels einer Anzeigeeinrichtung prinzipiell bewährt hat, besteht nach wie vor Verbesserungsbedarf. Insbesondere hat sich gezeigt, dass die existierenden Lösungen nicht immer eine gesamte Bandbreite der von den verschiedenen Fahrzeugherstellern vorgegebenen Kalibrierungsmustern zufriedenstellend anzeigen können.

Es besteht somit eine Aufgabe darin, das Kalibrieren eines Bildsensors eines Fahrzeugs insbesondere hinsichtlich Bedienfreundlichkeit und Anwendungsspektrum weiter zu verbessern.

Diese Aufgabe wird durch die Gegenstände der beigefügten unabhängigen Ansprüche gelöst. Vorteilhafte Weiterbildungen sind in den abhängigen Ansprüchen, in dieser Beschreibung und in den Figuren angegeben.

Entsprechend wird eine Vorrichtung zum Abbilden eines Kalibrierungsmusters für das Kalibrieren eines Bildsensors eines Fahrzeugs vorgeschlagen, wobei die Vorrichtung umfasst:
- eine außerhalb des Fahrzeugs angeordnete Anzeigeeinrichtung zum Abbilden des Kalibrierungsmusters,
- ein Haltegestell zum Abstützen der Anzeigeeinrichtung gegenüber einem Untergrund, wie zum Beispiel einem Werkstattboden,
wobei die Anzeigeeinrichtung relativ zu dem Haltegestell drehbar ist.

Durch die Drehbarkeit der Anzeigeeinrichtung kann die Anzeigefläche je nach räumlicher Ausrichtung eines aktuell vorgegebenen Kalibrierungsmusters geeignet gedreht werden. Hierdurch können sowohl Kalibrierungsmuster mit ausgeprägter räumlich vertikaler Erstreckung als auch mit ausgeprägter räumlich horizontaler Erstreckung präzise und in ausreichender Größe angezeigt werden.

Ein weiterer Vorteil resultiert daraus, dass die Anzeigeeinrichtung typischerweise eine rechteckförmige Form aufweist und typischerweise bei einer vertikal aufrechten Drehung wenig Platz in einer horizontalen Raumrichtung einnimmt. Je nach verfügbaren Platzverhältnissen kann die Anzeigeeinrichtungssumme somit geeignet gedreht werden, um platzsparend abgestellt zu werden, wenn sie aktuell nicht zum Einsatz kommt.

Die Anzeigeeinrichtung kann ein Flachbildschirm sein oder umfassen. Sie kann eine LED-Anzeigefläche umfassen.

Das Haltegestell kann optional auf einem Fahrgestell angeordnet sein, um entlang des Untergrunds verschoben zu werden. Der Untergrund kann insbesondere ein Werkstattboden und/oder allgemein eben sein. Das Haltegestell kann sich relativ zu dem Untergrund aufrecht und insbesondere vertikal erstrecken. Das Haltegestell kann dazu eingerichtet sein, die Anzeigeeinrichtung in einem festen oder optional variierbaren Abstand relativ zum Untergrund zu tragen. Das Haltegestell kann allgemein dazu eingerichtet sein, die Anzeigeeinrichtung vor einer Fahrzeugfront zu positionieren und insbesondere auf Höhe der Windschutzscheibe.

Gemäß einer Ausführungsform ist die Anzeigeeinrichtung um eine Drehachse drehbar, die in einem Winkel zu einer Anzeigefläche der Anzeigeeinrichtung verläuft und insbesondere in einem orthogonalen Winkel zu dieser Anzeigefläche.

Gemäß einer weiteren Ausführungsform umfasst die Vorrichtung ferner eine Drehlageerfassungseinrichtung, die dazu eingerichtet ist, wenigstens eine Drehlage der Anzeigeeinrichtung zu erfassen. Die erfasste Drehlage kann als ein Signal und/oder Datensatz an eine Steuereinrichtung der Vorrichtung ausgegeben werden. Sie kann zum Beispiel in einem digitalen Kalibrierprotokoll hinterlegt werden. Ein solches Kalibrierprotokoll kann einen Datensatz oder eine allgemeine digitale Informationssammlung umfassen oder bilden, welche mit dem Kalibriervorgang und/oder dem zugrundeliegenden Fahrzeug verknüpft, beispielsweise über eine Datenbank. Auf diese Weise kann zu seinem späteren Zeitpunkt die Durchführung des Kalibriervorgangs nachverfolgt werden und können etwaige Fehlerpotentiale automatisiert oder manuell identifiziert werden.

Zusätzlich oder alternativ kann die erfasste Drehlage für eine Verifizierung dahingehend genutzt werden, dass die für ein gegebenes Kalibrierungsmuster vorgegeben Ausrichtung der Anzeigeeinrichtung tatsächlich eingenommen wird. Ist dies nicht der Fall, kann die Vorrichtung zum Beispiel für ein Ausgeben von Warnmeldungen eingerichtet sein und/oder eine Durchführung des Kalibriervorgangs unterbinden, beispielsweise durch Nicht-Starten des Anzeigens des Kalibrierungsmusters.

Gemäß einer Variante entspricht die wenigstens eine Drehlage einer von:
- einer vertikalen Ausrichtung der Anzeigeeinrichtung, was zum Beispiel einem sogenannten Porträtmodus entsprechen kann;
- einer horizontalen Ausrichtung der Anzeigeeinrichtung, was zum Beispiel einem sogenannten Landschaftsmodus entsprechen kann.

Die Anzeigeeinrichtung und insbesondere eine Anzeigefläche von dieser kann eine erste Dimension und eine im Vergleich kürzere zweite Dimension aufweist, wobei die Ausrichtung der Anzeigevorrichtung durch die Ausrichtung der ersten Dimension definiert sein kann. Die erste und zweite Dimension können jeweils Seitenlängen der Anzeigeeinrichtung und insbesondere der Anzeigefläche angeben. Die Anzeigeeinrichtung und insbesondere deren Anzeigefläche kann allgemein rechteckig mit unterschiedlichen Seitenlängen sein.

Die vertikale und horizontale Lage können sich auf ein räumliches Koordinatenssystem beziehen. Die Vorrichtung kann dazu eingerichtet sein, dass ausschließlich diese Lagen oder allgemein ausschließlich zwei definierte Drehlagen dauerhaft und beispielsweise mechanisch gesichert eingenommen werden können, insbesondere mittels einer nachstehend erläuterten Arretierungseinrichtung. Beispielsweise kann die mechanische Sicherung und/oder Arretierungseinrichtung eine lösbare Rastverbindung oder eine andere mechanisch zumindest temporäre Fixierung insbesondere der Anzeigeeinrichtung relativ zum Haltegestell umfassen. Zusätzlich oder alternativ können diese definierten Drehlagen Endlagen eines verfügbaren Drehbereichs der Anzeigeeinrichtung sein, was wiederum mechanisch zum Beispiel über Anschlagschrauben o.ä. festgelegt sein kann.

Eine Ausführungsform sieht vor, dass die Drehlageerfassungseinrichtung wenigstens einen umfasst von:
- einem Drehlagen-Endschalter;
- einem Drehlagensensor, der dazu eingerichtet, eine der Anzeigeeinrichtungen auch zwischen deren Drehlage-Endlagen zu erfassen.

Der Drehlagenendschalter kann dazu eingerichtet sind, die Einnahme genau einer Drehlage zu erfassen, wohingegen der Drehlagensensor für ein kontinuierliches Erfassen der Drehlage oder auch Winkelposition der Anzeigeeinrichtung über insbesondere deren vollständigen Drehbereich eingerichtet sein kann.

Gemäß einer weiteren Variante weist die Vorrichtung ferner wenigstens einen Endanschlag zum Begrenzen der Drehung der Anzeigeeinrichtung um die Drehachse auf. Der Endanschlag kann insbesondere ein mechanisches Hindernis zum Blockieren der Drehung sein, beispielsweise eine Anschlagschraube oder ein anderer Vorsprung.

Bei einer Ausführungsform ist das Abbilden des Kalibrierungsmusters in Abhängigkeit von einer Drehlage der Anzeigeeinrichtung variierbar. Wird die Anzeigeeinrichtung gedreht, kann deren Auflösung und/oder internes Monitorkoordinatensystem automatisch geändert werden, beispielsweise unter Auswertung der von einer Drehlagenerfassungseinrichtung erfassten Drehlage. Dies kann mit einem automatischen Drehen und/oder Rendering der anzeigten Inhalte einschließlich des Kalibrierungsmusters einhergehen.

Gemäß einer Ausführungsform ist die Anzeigeeinrichtung mit der Haltevorrichtung über ein Drehgelenk verbunden, wobei das Drehgelenk dazu eingerichtet ist, die Anzeigeeinrichtung in verschiedenen Drehlagen zu halten. Das Drehgelenk kann einer nachfolgend erläuterten drehgelenkigen Verbindung entsprechen oder von dieser umfasst sein.

Die Vorrichtung kann optional ferner wenigstens eine Arretierungseinrichtung zum Arretieren der Anzeigeeinrichtung in einer eingestellten Drehlage aufweisen. Insbesondere kann die Anzeigeeinrichtung in wenigstens zwei Drehlagen mit einer Arretierungseinrichtung fixiert werden. Dies kann helfen, die Positioniergenauigkeit und damit die Genauigkeit der Kalibrierung zu verbessern.

Eine Weiterbildung sieht vor, dass die Anzeigeeinrichtung höhenverstellbar ist und die Arretierungseinrichtung oder eine andere Bremseinrichtung, die für ein Unterdrücken der Drehung der Anzeigeeinrichtung eingerichtet ist, in Abhängigkeit einer Höhenposition der Anzeigeeinrichtung lösbar ist. Insbesondere kann die Höhenposition derart gewählt sein, dass die Anzeigeeinrichtung in dieser Höhenposition auch bei Einnahme einer vertikalen Ausrichtung in einem Abstand zu dem Untergrund verbleibt. Dies verbessert die Betriebssicherheit, da Kollisionen der Anzeigeeinrichtung mit dem Untergrund verhindert werden können.

Die Vorrichtung kann ferner einen Aktor zur Höhenverstellung der Anzeigeeinrichtung aufweisen, wobei eine zulässige Höhenverstellung durch den Aktor in Abhängigkeit einer Ausrichtung der Anzeigeeinrichtung begrenzbar ist. Beispielsweise kann diese bei Einnahme einer vertikalen Ausrichtung der Anzeigeeinrichtung auf ein Mindestmaß begrenzt werden, d.h. kann keine beliebig kleine Höhe einstellbar sein, um wiederum Kollisionen mit dem Untergrund zu vermeiden. Der zulässige Bewegungs- oder auch Höhenverstellbereich des Aktors kann von einer Steuereinrichtung der Vorrichtung geeignet vorgegeben und/oder gesteuert werden, beispielsweise nach Maßgabe der von einer hier offenbarten Drehlagenerfassungseinrichtung erfassten Drehlage.

Eine Weiterbildung sieht vor, dass die Vorrichtung dazu eingerichtet ist, eine Ausrichtung der Anzeigeeinrichtung in Bezug auf eine orthogonal zu der Drehachse verlaufende Ebene bei Drehung der Anzeigeeinrichtung konstant zu halten. Hierfür können zum Beispiel entsprechend dimensionierte und/oder Kippstabile Drehlager zum Einsatz kommen, die keine Bewegungsfreiheitsgerade mit Ausnahme des Drehfreiheitsgerades zulassen.

Die Erfindung betrifft auch ein Verfahren zum Abbilden eines Kalibrierungsmusters für das Kalibrieren eines Bildsensors eines Fahrzeugs,
wobei das Verfahren umfasst:
   - Erfassen der Drehlage einer außerhalb des Fahrzeugs angeordneten Anzeigeeinrichtung, die zum Abbilden des Kalibrierungsmusters eingerichtet ist, beispielsweise mittels einer hier offenbarten Drehlagenerfassungseinrichtung;
und wobei wenigstens eine der folgenden Maßnahmen in Abhängigkeit der erfassten Drehlage ausgeführt wird:
   - Starten des Abbildens des Kalibrierungsmusters, z. B. wenn eine vorgegebene Drehlage eingenommen wird;
   - Verändern einer Ausrichtung des abgebildeten Kalibrierungsmusters, z. B. wenn die Drehlage verändert wird;
   - Ausgeben eines Bedienerhinweises, z. B. wenn eine vorgegebene Drehlage nicht eingenommen wird;
   - Verändern einer zulässigen Höhenverstellung der Anzeigeeinrichtung, z. B. wenn eine vorgegebene und insbesondere vertikale Drehlage eingenommen wird.

Sämtliche Ausführungen, Varianten und Weiterbildung im Kontext der Vorrichtung können ebenso im Kontext des Verfahrens gelten, und umgekehrt. Dies betrifft insbesondere bei Vorrichtung und Verfahren gleichlautendende Merkmale.

Beispielhafte Ausführungsformen der Erfindung werden im Folgenden anhand der schematischen Figuren erläutert. Figurenübergreifend können für gleichartige Merkmale die gleichen Bezugszeichen verwendet werden.
- Figur 1: zeigt eine Vorrichtung gemäß einer Ausführungsform der Erfindung, mittels derer ein erfindungsgemäßes Verfahren ausführbar ist, in einer perspektivischen Ansicht.
- Figur 2: zeigt die Vorrichtung aus Figur 1 in einer Seitenansicht.
- Figur 3: zeigt eine Explosionsdarstellung einer drehgelenkigen Verbindung der Vorrichtung aus Figur 1.
- Figur 4: zeigt eine perspektivische Teildarstellung der drehgelenkigen Verbindung aus Figur 3.
- Figur 5: zeigt eine Einzelteildarstellung einer Arretiervorrichtung der Vorrichtung aus Figur 1.
- Figuren 6: zeigt Einzelheiten betreffend Endanschläge der Drehbewegung der Vorrichtung aus Figur 1.
- Figur 7: zeigt Einzelheiten betreffend eine Drehlagenerfassungseinrichtung der Vorrichtung aus Figur 1

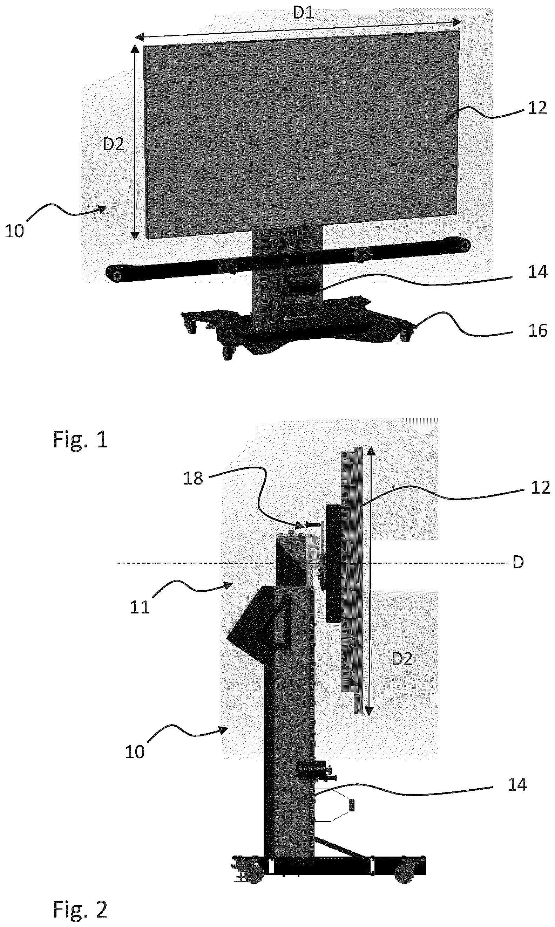

Figur 1 zeigt eine Vorrichtung 10 gemäß einer beispielhafte Ausführungsform, die zur Ausführung eines Verfahrens gemäß einer erfindungsgemäßen Ausführungsform eingerichtet ist. Die Vorrichtung 10 umfasst eine Anzeigeeinrichtung 12 in Form eines Monitors oder auch Bildschirms. Beispielhaft umfasst die Anzeigeeinrichtung 12 eine LED-Anzeigefläche (Light Emitting Diode) herkömmlicher Bauart. Nicht gesondert dargestellt ist eine von der Anzeigeeinrichtung 12 umfasste Steuereinrichtung, beispielsweise umfassend wenigstens einen Prozessor, der zum Ausführen von Programminstruktionen nach Art herkömmlicher Computer eingerichtet ist. Insbesondere kann die Steuereinrichtung zum Ändern einer Auflösung und/oder Drehung eines Monitorkoordinatensystems eingereicht sein, wenn die Drehlage der Anzeigeeinrichtung 12 in der hier geschilderten Weise geändert wurde.

Die Vorrichtung 10 umfasst ferner ein Haltegestell 14 mit einem optionalen Fahrgestell 16. Das Haltegestell 14 stützt die Anzeigeeinrichtung 12 gegenüber einem Untergrund ab, typischerweise gegenüber einem Werkstattboden.

Zudem verfügt die Vorrichtung 10 über eine Teleskopsäule, die mittels eines nicht einsehbaren Aktors 11 zwecks Höhenverstellung der Anzeigeeinrichtung 12 vertikal ein- und ausfahrbar ist.

In Figur 1 erkennt man, dass die Anzeigeeinrichtung 12 und genauer gesagt deren Anzeigefläche rechteckförmig sind. Eine erste und im Vergleich längere Dimension D1, welche einer ersten Seitenlänge der Anzeigefläche entspricht, ist räumlich horizontal angeordnet. Eine zweite und im Vergleich kürzere Dimension D2, welche einer zweiten Seitenlänge der Anzeigefläche entspricht, ist räumlich vertikal angeordnet. Mit Bezug auf die erste Dimension D1 als Referenz zeigt Fig. 1 somit eine horizontale Ausrichtung der Anzeigeeinrichtung 12.

Im Kalibrierbetrieb wird ein nicht dargestelltes Fahrzeug vor der Anzeigereinrichtung 12 positioniert, sodass die dem Betrachter von Figur 1 zugewandte Vorderseite der Anzeigeeinrichtung 12 der Fahrzeugfront zugewandt ist. Beispielsweise in oder nahe einer Windschutzscheibe integrierte Kameras können daraufhin die Anzeigeeinrichtung 12 und genauer gesagt darauf abgebildete Kalibrierungsmuster abbilden, um Kalibriermessungen nach bekannten Ansätzen auszuführen.

Figur 2 zeigt eine Seitenansicht der Vorrichtung aus Figur 1 mit nach wie vor horizontaler Ausrichtung der Anzeigeeinrichtung 12. Man erkennt zusätzlich ein Drehgelenk, hier als eine drehgelenkige Verbindung 18 bezeichnet, zwischen der Anzeigeeinrichtung 12 und dem Haltegestell 14. Mittels der drehgelenkigen Verbindung 18 kann die Anzeigeeinrichtung 12 um eine räumlich horizontal verlaufende Drehachse D relativ zum allenfalls verfahrbaren, aber nicht drehbaren Haltegestell 14 gedreht werden.

Diese Drehung ist zumindest insoweit möglich, als dass entgegen der horizontalen Ausrichtung aus Figur 1 die erste Dimension D1 räumlich vertikal und die zweite Dimension D2 räumlich horizontal angeordnet werden kann. Anders ausgedrückt kann die Anzeigeeinrichtung 12 gegenüber der Ausrichtung in Figur 1 um wenigstens 90° um die Drehachse D entgegen und/oder im Uhrzeigersinn gedreht werden. Wiederum bezugnehmend auf die längere Dimension D1 als Referenz, resultiert dies in einer vertikalen Ausrichtung der Anzeigenrichtung 12.

Wird die Vorrichtung 10 im Werkstattbetrieb aktuell nicht benötigt, kann die Anzeigeeinrichtung 12 je nach den vorhandenen Platzverhältnissen gedreht und dadurch platzsparend abgestellt werden.

Soll hingegen eine Kalibrierung erfolgen, kann je nach Ausrichtung des anzuzeigenden Kalibrierungsmusters die Anzeigeeinrichtung 12 geeignet gedreht werden. Ist das Kalibrierungsmuster beispielsweise räumlich horizontal gestreckt, kann die horizontale Ausrichtung gemäß Figur 1 gewählt werden. Ist das Kalibrierungsmuster hingegen räumlich vertikal gestreckt, kann die gegenüber Figur 1 um 90° gedrehte horizontale Ausrichtung der Anzeigeeinrichtung 12 gewählt werden. Welche der Ausrichtung anzuwenden ist, kann einem Bediener mittels der Anzeigenrichtung 12 oder auch mittels einer anderen Computereinrichtung, beispielsweise einem externen Diagnosegerät bekannter Bauart, vorgegeben werden.

Das Diagnosegerät wird typischerweise dazu genutzt, den Kalibrierbetrieb nach Maßgabe eines aktuell zu kalibrierenden Fahrzeugtypen oder auch eines individuellen Fahrzeugs zu steuern und zu kalibrieren. Das Diagnosegerät kann ein herstellerseitig vorgegebenes Kalibrierungsmuster zum Beispiel aus einer internen Datenbank auslesen oder von einem externen Server abrufen. Je nach den abzubildenden Abmessungen dieses Kalibrierungsmusters und/oder je nach einer bereits in der Datenbank hinterlegten Ausrichtungsanweisung, kann das Diagnosegerät und/oder kann eine interne Steuereinrichtung der Vorrichtung 10 die einzustellende Ausrichtung der Anzeigeeinrichtung 12 ermitteln und ausgeben.

Neben einer somit sichergestellten präzisen Darstellbarkeit von Kalibrierungsmustern unterschiedlichster horizontaler und/oder vertikaler Erstreckung, kann die Vorrichtung 10 die Bedienfreundlichkeit auch wie folgt verbessern: In an sich bekannter Weise ist die Vorrichtung 10 vor Durchführen des Kalibrierbetriebs präzise relativ zu einem Fahrzeug, das einen zu kalibrierenden Bildsensor umfasst, zu positionieren. Insbesondere betrifft dies einen Abstand relativ zum Fahrzeug, eine Höhe sowie relative Winkel zum Fahrzeug in einem Raumkoordinatensystem. Mit der hier offenbarten Lösung kann sichergestellt werden, dass auch nach Ändern der Ausrichtung der Anzeigenrichtung 12 diese Ausrichtung nach wie vor beibehalten wird. Beispielsweise bleibt das Haltegestell 14 unbewegt auf dem Untergrund. Ferner ist die nachstehend noch näher erläuterte drehgelenkige Verbindung 18 derart ausgebildet, dass sie neben der Drehbewegung der Anzeigeeinrichtung 12 um die Drehachse D keine Verkippungen derselbigen oder Bewegungen um andere Freiheitsgrade zulässt.

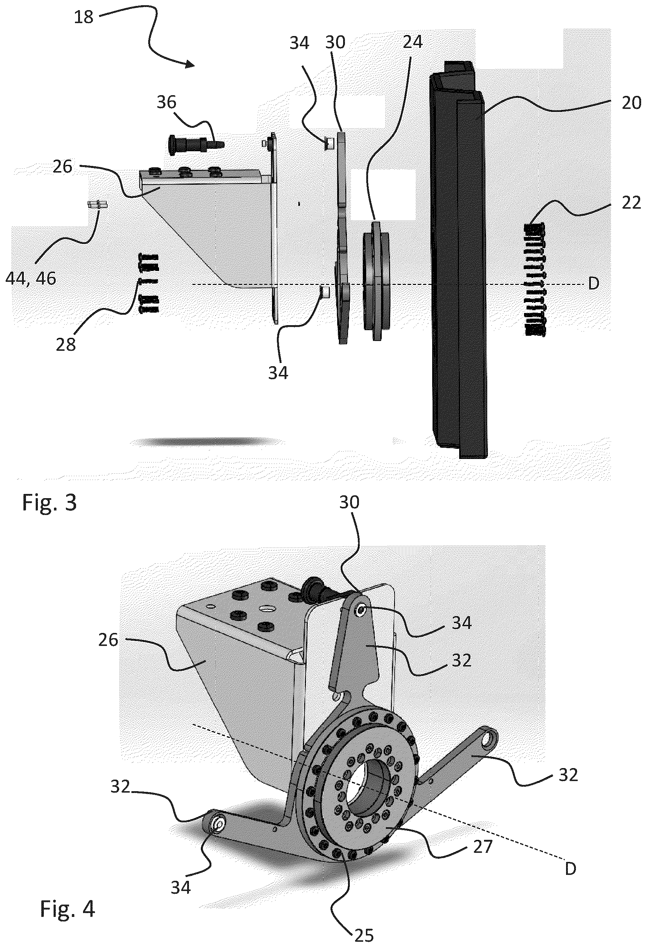

Anhand von Figur 3 werden im Folgenden Einzelheiten der drehgelenkigen Verbindung 18 erläutert. Dabei zeigt Figur 3 diese drehgelenkige Verbindung 18 in einer Explosionsdarstellung, bei der die Einzelteile in oder zumindest nahe der drehgelenkigen Verbindung 18 entlang der Drehachse D verteilt sind. Gezeigt ist eine Montageplatte 20, an der die nicht dargestellte Anzeigeeinrichtung 12 befestigt ist. An ihrer von der Anzeigeeinrichtung 12 abgewandten Rückseite ist die Montageplatte 20 mittels einer Vielzahl von Schrauben 22 mit einem Drehlager 24 und genauer gesagt und einem ersten Ring 25 verschraubt, siehe Figur 4. Dieses Drehlager 24 kann als solches als Drehgelenk verstanden werden, welches die Anzeigeeinrichtung 12 und das Haltegestell 14 verbindet. Das Drehlager 24 ist mit einem zweiten Ring 27 (siehe Figur 4) mittels einer Vielzahl von Schrauben 28 mit einem Halter 26 verschraubt, welcher an dem Haltegestell 14 befestigt ist. Der erste und zweite Ring 25, 27 sind relativ zueinander um die Drehachse D drehbar. Das Haltegestell 12 ist nicht um die Drehachse D drehbar, sodass nach Maßgabe der Verdrehung der Anzeigeeinrichtung 12 folglich der erste Ring 25 relativ zu dem stillstehenden zweiten Ring 27 gedreht wird.

Wie sich aus Figur 4 verdeutlicht, ist mit dem ersten Ring 27 ein Buchsenhalter 30 zur gemeinsamen Drehung um die Drehachse D gekoppelt. Der Buchsenhalter 30 weist in Bezug auf die Drehachse D in einem Winkelabstand zueinander angeordnete und sich radial erstreckende Arme 32 auf. Beispielhaft sind drei Arme 32 gezeigt, wobei jedoch auch zwei Arme 32 prinzipiell ausreichen würden. An den radial äußeren Enden von zweien der Arme 32 sind Buchsen 34 eingepresst.

An dem Halter 26 ist ein federgelagerter Rastbolzen 36 montiert, der ein Beispiel einer Arretierungsvorrichtung ist. Der Rastbolzen 36 ist dazu eingerichtet in Richtung des Buchsenhalters 30 hervorzustehen. Wird durch eine Drehung des Buchsenshalters 30 eine der Buchsen 34 gegenüberliegend zu dem Rastbolzen 36 positioniert, rastet dieser in die Buchse 34 ein, sodass eine weitere Drehung des Buchsenshalters 30 erschwert und nur durch signifikante Krafterhöhung möglich ist. In letzterem Fall wird der Rastbolzen 36 durch Kontaktkräfte mit den Innenwänden der Buchse 34 aus derselbigen gedrängt. Die Rastbewegungen des Rastbolzen 34 werden in dem gezeigten Beispiel durch dessen optionale konische Form unterstützt.

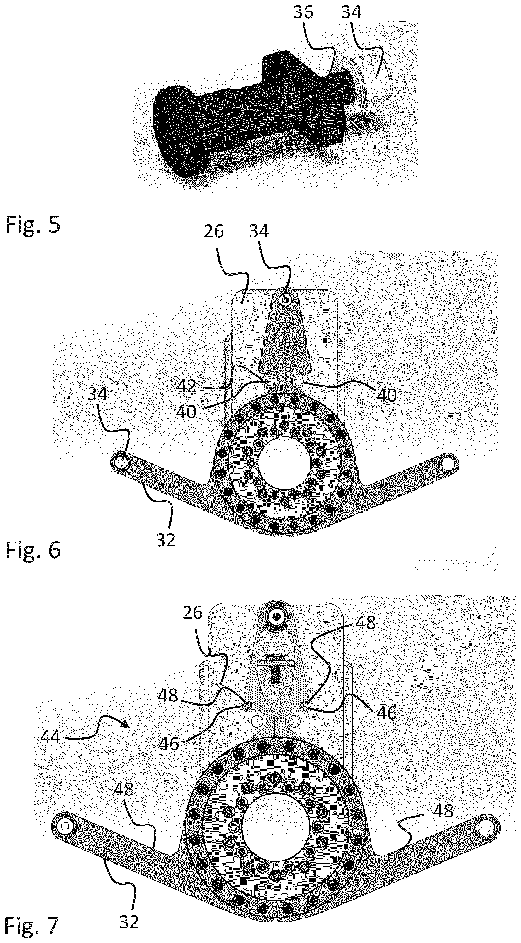

Figur 5 zeigt in einer Einzelteildarstellung den in Eingriff mit einer der Buchsen 34 stehenden Rastbolzen 36.

Für viele Anzeigeeinrichtungen 12 sind eine einzige horizontale und eine einzige vertikale Ausrichtung, die auch als Landschafts- und Portraitmodus bezeichnet werden, herstellerseitig vorgegeben. D. h., die Anzeigeeinrichtung kann ausgehend von ihrer beispielsweise horizontalen Ausrichtung nicht um 180° gedreht werden, um wiederum eine zulässige horizontale Ausrichtung einzunehmen, da herstellerseitig genau nur eine zulässige horizontale Ausrichtung vorgegeben ist. Bildlich gesprochen ist vorgeben, welche Seite der Anzeigeeinrichtung 12 bei Einnahme der horizontalen Ausrichtung vertikal oben positioniert sein soll, so dass nur eine einzige zulässige horizontale Ausrichtung existiert. In Bezug auf die vertikale Ausrichtung gilt Analoges, bspw. in Bezug darauf, welche Seite eine linke oder rechte Seite bilden soll.

Um zwischen den anhand der Figuren 1 und 2 erläuterten gewünschten Ausrichtungen der Anzeigeeinrichtungen 12 zu wechseln, ist somit ein Drehwinkel um die Drehachse D von 90° ausreichend. Sind jedoch mehrere zulässige horizontale und/oder vertikaler Ausrichtungen möglich, könnte auch in den dritten Arm 32 aus Figur 4 eine dort noch nicht vorhandene Drehbuchse 34 eingesetzt werden. Ebenso kann der dritte Arm 32 aber alternativ zu dem in Figur 4 linken Arm 32 mit einer Buchse 34 versehen werden, falls die für eine konkrete Anzeigeeinrichtung 12 herstellerseitig vorgegebenen horizontale und/oder vertikale Ausrichtung dies erfordern.

Im Fall von Figur 4 steht die dortige obere Buchse 34 mit dem Rastbolzen 36 in Eingriff. Die Anzeigeeinrichtung 12 nimmt eine erste von ihrer horizontalen und vertikalen Ausrichtung ein. Hiervon ausgehend kann mittels eines Drehmoments um die Drehachse D der Eingriff gelöst werden und kann der Buchsenhalter 30 im Uhrzeigersinn um 90° gedreht werden. Daraufhin gelangt die in Figur 4 linke Buchse 34 in Eingriff mit dem Rastbolzen 36, woraufhin die Anzeigeeinrichtung 12 ihre entsprechend andere von der vertikalen und horizontalen Ausrichtung einnimmt. Durch eine umgekehrte Drehbewegung kann wieder zu der ursprünglichen Ausrichtung gewechselt werden.

Figur 4 zeigt ferner das Vorhandensein optional zweier Bohrungen 40 in dem Halter 26, in die Anschlagschrauben 42 einsetzbar sind. Auch hier kann wiederum je nach für eine konkrete Anzeigeeinrichtung 12 vorgegebene horizontale und vertikale Ausrichtung eine Anschlagschraube 42 in eine der Bohrungen 40 eingesetzt werden, um die Drehbewegung des Buchsenhalters 30 geeignet zu begrenzen. Prinzipiell ist jedoch eine Bohrung 40 und eine Anschlagschraube 42 ausreichend.

In dem gezeigten Beispiel aus Figur 6 verhindert die Anschlagschraube 42 ein weiteres Drehen des Buchsenhalters 30 nach links, gleichzeitig aber auch ein Drehen des in Figur 6 linken Arms 32 über die Position der Anschlagschraube 42 hinaus. Somit ist der mögliche Drehbereich des Buchsenhalters 30 und damit der Anzeigeeinrichtung 12 eindeutig festgelegt. Mittels der Rastverbindung von Rastbolzen 36 und Buchsen 34 sind auch Endlagen der Anzeigeeinrichtung 12 eindeutig definiert und kann die Anzeigeeinrichtung 12 in diesen präzise gehalten werden.

Anhand von Figur 7 werden ferner Einzelheiten einer zumindest teilweise in Figur 3 dargestellten Drehlagenerfassungseinrichtung 44 erläutert. Diese umfasst zwei Reed-Sensoren 46, die in dem Halter 26 montiert sind, wobei auch andere Näherungssensoren verwendbar wären. Ferner umfasst die Drehlagenerfassungseinrichtung 44 beispielhaft vier Magnete 48 - drei wären prinzipiell ausreichend und insbesondere der am weitesten rechte könnte weggelassen werden -, die in dem Buchsenhalter 30 montiert und gemeinsam mit diese verdrehbar sind. Die Magnete 48 sind definiert verteilt, um je nach Drehlage des Buchsenhalters 30 und speziell bei Einnahme von dessen Endlagen, die jeweils einer von der horizontalen und vertikalen Ausrichtung der Anzeigeeinrichtung 12 entsprechen, die Reed-Sensoren 46 zu aktivieren.

Bei der in Figur 7 beispielhaften Konfiguration gilt Folgendes: Bei Einnahme einer ersten von horizontaler und vertikaler Ausrichtung der Anzeigeeinrichtung 12 werden beide Reed-Sensoren 46 durch jeweils einen der Magnete 48 ausgelöst. Dies entspricht der Stellung aus Figur 7, bei der jedem der Reed-Sensoren 46 einem Magneten 48 direkt gegenüberliegt.

Bei Einnahme der entsprechend anderen von horizontaler und vertikaler Ausrichtung der Anzeigeeinrichtung 12 wird nur einer der Reed-Sensoren 46 ausgelöst. Aufgrund der anhand von Figur 6 erläuterten Positionierung der Anschlagsschraube 42 betrifft dies in Figur 7 den linken Reed-Sensor 46. Auf diese Weise kann die eingenommene Ausrichtung der Anzeigeeinrichtung 12 sensorbasiert überprüft und verifiziert werden.

Diese Information kann zum Beispiel dazu genutzt werden, Warnmeldungen auszugeben, wenn die Anzeigeeinrichtung 12 aus einer horizontale Ausrichtung gedreht wird, das Haltegestell 14, sofern höhenverstellbar, aber keine ausreichende Höhe aufweist, die eine vertikale Ausrichtung Anzeigeeinrichtung 12 erlaubt.

Beispielsweise könnte bei Einnahme der vertikalen Ausrichtung der Rastbolzen 36 (d.h. die Arretierungsvorrichtung) nicht manuell und/oder händisch betätigt und insbesondere gelöst werden, wenn die Anzeigeeinrichtung 12 bzw. das Haltegestell 14 eine gewisse Höhe unterschritten hat.

Der Rastbolzen 36 (d.h. die Arretierungsvorrichtung) kann erst dann gelöst werden, wenn die Anzeigeeinrichtung 12 bzw. das Haltegestell 14 eine ausreichende Höhe aufweist, die eine vertikale Ausrichtung ermöglicht. Auf diese Weise werden Kollisionsrisiken der Anzeigeeinrichtung 12 mit dem Untergrund oder dem Haltegestell 14 reduziert. Zusätzlich oder alternativ kann in diesem Fall eine nicht dargestellte Bremseinrichtung aktiviert werden, die eine Drehung der Anzeigeeinrichtung 12 in die vertikale Ausrichtung unterbindet.

## Patentansprüche

1. Vorrichtung (10) zum Abbilden eines Kalibrierungsmusters für das Kalibrieren eines Bildsensors eines Fahrzeugs, wobei die Vorrichtung umfasst:
- eine außerhalb des Fahrzeugs angeordnete Anzeigeeinrichtung (12) zum Abbilden des Kalibrierungsmusters,
- ein Haltegestell (14) zum Abstützen der Anzeigeeinrichtung (12) gegenüber einem Untergrund,
wobei die Anzeigeeinrichtung (12) relativ zu dem Haltegestell (14) drehbar ist.

2. Vorrichtung (10) nach Anspruch 1,
wobei die Anzeigeeinrichtung (12) um eine Drehachse (D) drehbar ist, die in einem Winkel zu einer Anzeigefläche der Anzeigeeinrichtung (12) verläuft und insbesondere in einem orthogonalen Winkel zu dieser Anzeigefläche.

3. Vorrichtung (10) nach Anspruch 1 oder 2,
ferner umfassend eine Drehlageerfassungseinrichtung (44), die dazu eingerichtet ist, wenigstens eine Drehlage der Anzeigeeinrichtung (12) zu erfassen.

4. Vorrichtung (10) nach Anspruch 3,
wobei die wenigstens eine Drehlage einer entspricht von:
- einer vertikalen Ausrichtung der Anzeigeeinrichtung (12);
- einer horizontalen Ausrichtung der Anzeigeeinrichtung (12).

5. Vorrichtung (10) nach einem der Ansprüche 3 oder 4,
wobei die Drehlageerfassungseinrichtung (44) wenigstens einen umfasst von:
- einem Drehlagen-Endschalter;
- einem Drehlagensensor (46), der dazu eingerichtet, eine Drehlage der Anzeigeeinrichtung (12) auch zwischen deren Drehlage-Endlagen zu erfassen.

6. Vorrichtung (10) nach einem der vorangehenden Ansprüche,
ferner aufweisend: wenigstens einen Endanschlag zum Begrenzen der Drehung der Anzeigeeinrichtung (12) um die Drehachse (D).

7. Vorrichtung (10) nach einem der vorangehenden Ansprüche,
wobei das Abbilden des Kalibrierungsmusters in Abhängigkeit von einer Drehlage der Anzeigeeinrichtung (12) variierbar ist.

8. Vorrichtung (10) nach einem der vorangehenden Ansprüche,
wobei die Anzeigeeinrichtung (12) mit der Haltevorrichtung (14) über ein Drehgelenk (18) verbunden ist, wobei das Drehgelenk (18) dazu eingerichtet ist, die Anzeigeeinrichtung (12) in verschiedenen Drehlagen zu halten.

9. Vorrichtung (10) nach einem der vorangehenden Ansprüche,
ferner aufweisend: wenigstens eine Arretierungseinrichtung (36) zum Arretieren der Anzeigeeinrichtung (12) in einer eingestellten Drehlage.

10. Vorrichtung (10) nach Anspruch 9,
wobei die Anzeigeeinrichtung (12) höhenverstellbar ist und die Arretierungseinrichtung (36) in Abhängigkeit einer Höhenposition der Anzeigeeinrichtung (12) lösbar ist.

11. Vorrichtung (10) nach den Ansprüchen 10,
wobei die Höhenposition derart gewählt ist, dass die Anzeigeeinrichtung (12) in dieser auch bei Einnahme einer vertikalen Ausrichtung in einem Abstand zu dem Untergrund verbleibt.

12. Vorrichtung (10) nach einem der vorangehenden Ansprüche,
ferner aufweisend: einen Aktor (11) zur Höhenverstellung der Anzeigeeinrichtung (12), wobei eine zulässige Höhenverstellung durch den Aktor in Abhängigkeit einer Ausrichtung der Anzeigeeinrichtung (12) begrenzbar ist.

13. Vorrichtung (10) nach einem der vorangehenden Ansprüche,
wobei die Vorrichtung (10) dazu eingerichtet ist, eine Ausrichtung der Anzeigeeinrichtung (12) in Bezug auf eine orthogonal zu der Drehachse (D) verlaufende Ebene bei Drehung der Anzeigeeinrichtung (12) konstant zu halten.

14. Verfahren zum Abbilden eines Kalibrierungsmusters für das Kalibrieren eines Bildsensors eines Fahrzeugs,
wobei das Verfahren umfasst:
- Erfassen der Drehlage einer außerhalb des Fahrzeugs angeordneten Anzeigeeinrichtung (12), die zum Abbilden des Kalibrierungsmusters eingerichtet ist,
und wobei wenigstens eine der folgenden Maßnahmen in Abhängigkeit der erfassten Drehlage ausgeführt wird:
- Starten des Abbildens des Kalibrierungsmusters;
- Verändern einer Ausrichtung des abgebildeten Kalibrierungsmusters;
- Ausgeben eines Bedienerhinweises;
- Verändern einer zulässigen Höhenverstellung der Anzeigeeinrichtung (12).
